# EUROPEAN PATENT APPLICATION

(11) **EP 4 032 868 A1**
(43) Date of publication of application: **27.07.2022**
(21) Application number: 21211125.6
(22) Date of filing: 29.11.2021
(51) Int. Cl.: C04B 18/02, C04B 28/02, C04B 28/04, C04B 28/06, C04B 28/08, B09B 3/00

(54) **IMMOBILIZING CHEMICAL SPECIES**

(30) Priority: 22.01.2021 NL 2027369
(71) Applicant: Pkb Top Holding B.V., 5241 CB Rosmalen (NL)
(72) Inventor: Van BAKEL, Petrus Kálmán, 5241 CB Rosmalen (NL)
(74) Representative: Vogels, Leonard Johan Paul

(57) **Abstract**

The present invention relates to a composition and use thereof for immobilization of chemical species, in particular chemical species that may be released from ash or from slag, a mixture comprising said composition and granulate, in particular granulate from fly ash, from burn ash, waste from mining, such as from mining of raw material, sludge, and combinations thereof, a support material comprising said mixture, and a method of obtaining said mixture.

## Description

### FIELD OF THE INVENTION

The present invention relates to a composition and use thereof for immobilization of chemical species, in particular chemical species that may be released from ash or from slag, a mixture comprising said composition and granulate, in particular granulate from fly ash, from burn ash, waste from mining, such as from mining of raw material, sludge, and combinations thereof, a support material comprising said mixture, and a method of obtaining said mixture.

### BACKGROUND OF THE INVENTION

The present invention is in the field of immobilisation of chemical species with additives, in particular chemical species released by ash and slag from household and industrial waste incineration. This ash or slag may be shaped to or used unshaped as a building material suitable for use within environmental regulations. When reusing released soil, sludge, construction and demolition waste, as well as industrially released residues, such as from a waste energy power plant (AEC), combustion ash, bottom ash, fly ash and substances from processes for the extraction of primary raw materials, also identified as carrier, one often encounters the problem that these remaining residues (the carrier) contain many chemical contaminants. These include heavy metals and other non-metals such as chloride, sulphates, bromide and fluoride. These substances may be referred to as pollutants or contaminants.

These contaminants, which are hazardous to the environment, human beings, and living organisms in general, often leach out in concentrations far above the safe norm allowed by the Dutch Soil Quality Decree, making it impossible to reuse the carriers without further treatment. Currently, these carriers are often used to create stabilisation layers under road foundations or as landfills. These cement-bound stabilisation products, with a typical compressive strength of 1.5 mPa (N/mm²) or higher are a sub-optimal solution that still gives the material a certain useful function. Such cement-bound stabilisation is often referred to as a "shaped building material" and, within the Soil Quality Decree, falls under strict leaching requirements determined by a 64-day diffusion test on the bound product. However, when such a construction reaches the end of its service life (the road foundation is broken up), the material released, mainly due to the chlorides present, can again be labelled as chemical waste. This can then only be immobilised again, or dumped, but cannot be freely reused in any other capacity.

Incidentally, AT 391 639 B, and WO 93/04995 A1 may be referred to. AT 391 639 B recites a method for the treatment of waste materials which may contain environmentally relevant pollutants and/or organic components, with hydraulic binders, if appropriate with slags, in particular blast furnace slag, fly ashes, clays, in particular bentonites, mineral additives, conventional additives, additions of bitumen and/or coal tar and polymer-forming substances, the said method being distinguished in that a pH value of above 10, is set by the addition of alkaline-reacting substances, in that the waste materials, pre-treated if appropriate, are mixed, if necessary with the addition of water, with hydraulic binders based on Portland cement clinker, an alumina cement clinker and/or a hydraulic lime with a content of calcium aluminates and/or calcium aluminate ferrites of at least 10%, in particular of more than 15%, more preferably of more than 20% and, particularly preferably, of more than 30%, and, if appropriate, these mixtures are converted either directly into mouldings or into compact bodies, from which mouldings are then obtained by admixing further hydraulic or nonhydraulic binders, if appropriate with the above method steps being repeated. WO 93/04995 A1 recites a method for the ecologically safe disposal of lead-contaminated hazardous industrial wastes (such, as for example, those generated as discardable by-products in primary and secondary lead smelting operations, especially, blast furnace slags and matte), which comprises reducing the size of the lead-contaminated industrial wastes and treating them, prior to encapsulation in a hardenable material, with the naturally occurring zeolite, clinoptilolite, in an amount sufficient to prevent lead ions (Pb⁺²) from leaching out of such industrial wastes, through exposure to the action of atmospheric agents (e.g., hot air and rain, or as a result of cyclical freezing and thawing in temperature climates), even over an extended period of time.

So at least in some cases a risk for leaching of chemical species from carriers exists.

The present invention therefore relates to a composition for immobilizing chemical species and further aspects thereof, which overcomes one or more of the above disadvantages, without compromising functionality and advantages.

### SUMMARY OF THE INVENTION

It is an object of the invention to overcome one or more limitations of prior art composition for immobilizing chemical species. In a first aspect the present invention relates to a composition for immobilization of chemical species comprising 1-30 wt.% of a tectosilicate, in particular 2-25 wt.%, more in particular 8-22 wt.%, such as 12-20 wt.%, in particular a tectosilicate comprising silicon-oxide tetrahedra, 10-50 wt.% of cement, in particular 20-40 wt.%, more in particular 25-37 wt.%, such as 27-35 wt.%, 0-50 wt.% water, in particular 10-40 wt.%, more in particular 25-37 wt.%, such as 30-35 wt.%, 0.5-10 wt.% nitrate, preferably CaNO3, in particular 0.5-8 wt.%, more in particular 1-4 wt.%, such as 1.5-2.5 wt.%, 0-25 wt.% of quartz, silicon oxide, glass, opal, or a combination thereof, in particular 0.5-20 wt.%, more in particular 1-15 wt.%, such as 5-12 wt.%, 0-50 wt.% rock flour, in particular 10-35 wt.%, more in particular 15-30 wt.%, such as 17-24 wt.%, and 0-3 wt.% reinforcing material, such as micro silica, and fumed silica, wherein all weight percentages are based on a total weight of the composition.

As cement-bound (shaped) building materials can leach in view of various parameters and there has been no adequate solution to this to date, inventors offer a solution to bind the chemical contaminants in the shaped building material so that leaching is limited. In order to arrive at the limits of leaching of a shaped building material, a mixture is made by application of several residual flows that is sufficient for cement binding. This means that a product is provided by mixing waste materials so that several types of waste raw materials can be used. This method of bringing together residual flows with different chemical contamination (e.g. sifted sand from construction and demolition waste has a lot of sulphates and few chlorides, whereas combustion ash and AEC granulate have a lot of chlorides and few sulphates) by mixing means that mixtures obtained remain below a limit value that makes immobilisation with cement possible.

With the present invention, in particular the composition, the above-mentioned pollutants in the carrier are immobilized in such a way that more substances of the same composition can be used in an immobiliser without the need to mix waste flows. With the present invention, the leaching of pollutants is drastically reduced and can even be reduced in some applications to below the free recycling limit on unbound products as laid down in the Soil Quality Decree. The invention may consist of mixing additives with the carrier. When mixed, a chemical/physical reaction occurs that binds polluting substances. This reduces the leaching, depending on the dosage of the additives, by 25% to as much as 75% of the pollutants present in the carrier. The results of leaching may vary due to the varying composition of the carrier and the concentration of the pollutants.

More specifically, about the invention relates to an immobiliser (a mixture of one or more (waste) materials) with the addition of a binding agent and other additives. By adding the binding agent, the contaminants in the various (waste) materials are physically and/or chemically bound. According to current Dutch legislation, this immobiliser must comply with the Soil Quality Act Decree and the more specific part of the BRL 9322. This stipulates that the leaching of chemically contaminated substances must be tested against the limit values for leaching using a diffusion test (see table 1). Depending on the grain size, the diffusion test may be performed on a cylinder (a proctor) with a diameter of 100 or 150 mm. After 28 days of curing, the proctor is placed in a tank with slightly acidified distilled water and according to a specific sequence, the water is refreshed after 9, 16 and 63 days, and measured for contaminants. After the 63rd day of measurement, all measured pollutants are added up and this gives the leaching value, which is checked against the table 1. If the leaching remains below these limits, a 100-year certainty is guaranteed. The leaching can also be determined on an unformed building material (the carrier) by a L/S 10 (or 20) test (so-called shoot test) or column test on the carrier with a fraction 0/4 (divided carrier into 0-4 mm particles), which after testing values against table 1 of limit values opposite indicates whether the material falls within the scope of free reuse or must be immobilised.

**Table 1: limit values for certain chemical species.**

| Boundary value | free re-use | isolate | shaped | bound |
|---|---|---|---|---|
| Norm | N | IBC | V | Immobilized |
| Test species | mg/kg.ds | mg/kg.ds | mg/m2 | mg/kg.ds |
| Antimony (Sb) | 0,32 | 0,70 | 8,70 | 2,00 |
| Arsenic (As) | 0,90 | 2,00 | 260,00 | 2,00 |
| Barium (Ba) | 22,00 | 100,00 | 1.500,00 | 100,00 |
| Cadmium (Cd) | 0,04 | 0,06 | 3,80 | 0,06 |
| Chromium (Cr) | 0,63 | 7,00 | 120,00 | 7,00 |
| Cobalt (Co) | 0,54 | 2,40 | 60,00 | 2,40 |
| Copper (Cu) | 0,90 | 10,00 | 98,00 | 15,00 |
| Mercury (Hg) | 0,02 | 0,08 | 1,40 | 0,08 |
| Lead (Pb) | 2,30 | 8,30 | 400,00 | 8,30 |
| Molybdenum (Mo) | 1,00 | 15,00 | 144,00 | 15,00 |
| Nickel (Ni) | 0,44 | 2,10 | 81,00 | 2,10 |
| Selene (Se) | 0,15 | 3,00 | 4,80 | 3,00 |
| Tin (Sn) | 0,40 | 2,30 | 50,00 | 2,30 |
| Vanadium (V) | 1,80 | 20,00 | 320,00 | 20,00 |
| Zinc (Zn) | 4,50 | 14,00 | 800,00 | 14,00 |
| Bromide (Br) | 20 | 34 | 670 | 34 |
| Chloride [CI] | 616 | 8.800 | 110.000 | 7.500 |
| Fluoride (F) | 55 | 1.500 | 2.500 | 1.500 |
| Sulphate | 2.430 | 20.000 | 165.000 | 20.000 |

In a scouring test or column test, water is flushed through a tube filled with carrier and what is in the flushing water is measured and a total is then compared with values in table 1. If the material is below these limits, it can be safely reused without any treatment. Practice has shown that the heavy metals are better protected against leaching in a shaped building material, but the anions such as chloride and sulphates leach out strongly in both cases (both bound and unbound building materials).

The present invention was initially developed on AEC materials released from the incineration of household waste and construction and demolition waste.

The present invention binds the carrier with the right amount of additives comprising of cement, tectosilicates, and possibly additional additives such as calcium nitrate to create a stabilisation/concrete-like product that can be used as road foundations or other appropriate applications. Water is also added for activation of the system, depending on the dosage of the additives and the fineness of the carrier.

The invention is applicable to all types of polluted raw materials (the carrier); the limitation lies in the possibility of binding the polluting substances in such a way that it fits within the limit values of a shaped building material.

The present invention shows that, in order to bind the heavy metals, chlorides, bromides and sulphates, a composition of 10 to 30 kg tectosilicates in combination with 35 to 75 kg cement and 20 to 80 kg water per tonne of carrier is generally required.

This combination, which is considered the most optimal, of 25 kg of tectosilicate and 50 kg of cement per tonne of carrier with 30 kg of water, gives good results in all cases. To immobilise individual pollutants even more, other additives can be applied, but tectosilicate and cement are always necessary. Calcium nitrate, for example, can be used to reduce bromide and antimony in an unbound building material.

This formulation of cement and tectosilicate can also be combined for construction purposes with stone meal, fly ash, blast furnace slag or other filler and a higher cement content. It is found that tectosilicates in combination with cement and the right amount of water are able to bind heavy metals as well as the anions chlorides, bromides, sulphates, fluorides. Zeolites can be produced both artificially and through soil extraction; the so-called natural zeolites. These natural and artificial zeolites are all effective in immobilisation; given the price difference, natural zeolites are preferable.

In summary some examples of the present immobilization are as follows.

By applying tectosilicates, such as tectosilicates, in combination with cement, leachable pollutants can be immobilised in mineral materials, such as soil, sludge, incineration ash, industrial residues, etc. This makes it possible to free a carrier, as it were, of hazardous leaching of chemical species into the living environment (leaching of hazardous substances into the environment and groundwater). The quantity of tectosilicates, such as zeolites, may be determined by the nature of the raw material in which the pollutants are present, the specific surface area (the fineness) thereof, and the level of the pollutants. For Tectosilicate to work in a solid, it is preferred to use Tricalcium aluminate (C3A) and Tetra calcium alumino ferrite (C4AF), which may be found in cement. To initiate the reaction, a moist environment is typically required, which is why water is added to the support to be immobilised. For the cement inventors prefer to choose a Portland or a blast-furnace cement.

The use of small amounts, such as 10 to 25 kg of tectosilicates, such as zeolites, per 1000 kg of carrier binds the polluting substances, in combination with the use of cement (or another binding agent). These pollutants do not become (sufficiently) immobile with cement alone, more specifically the chlorides and bromides present in the carrier. The amount of cement, tectosilicate and other fillers to be added may be determined by the fineness, i.e. specific surface area, of the carrier. The use of tectosilicate in combination with micro silica or silica-fume has a reinforcing effect on the curbing of the leaching on shaped building materials because these latter substances seal the pores in the concrete surface.

To improve prevention of leaching of antimony, copper, and bromide, in combination with tectosilicate, such as zeolite, in unformed building materials, an extra addition of calcium nitrate in the amount of 3 to 8 kg per tonne of carrier may be required.

In order to bind antimony and copper in a non-developed building material, the present invention may use a combination of cement (e.g. approx. 5 kg) and tectosilicate (e.g. approx. 10 kg) supplemented with (calcium) nitrate (e.g. approx. 5 kg). This is found to immobilise these species sufficiently, e.g. to bind 50% to 80% antimony and copper, and thus stop them from leaching. It also may be used as a granular building material.

By using tectosilicate (e.g. zeolite) combined with cement, all leachable substances of the Soil Quality Act (15 heavy metals and 4 anions) are immobilised. All these substances will have a reduced leaching, somewhat depending on the quantity of cement and tectosilicate, and even when immobilised several times in the same way, this can be reduced to 90%, which is considered sufficient. It is noted that in water tectosilicate may bind heavy metals and the like, but its use in carriers and the like is not known.

The present composition works with all mineral residual flows and also has a favourable effect on poly aromatic hydrocarbons (PAHs), poly chlorobiphenyls (PCBs), and mineral oil, which are mainly present in sludge-like materials.

The tectosilicate is fount to also acts as a binding agent so that the mineral residue can be better bound in a shaped building material with less binding agent.

One may immobilise more times in order to reduce the pollution. A good solution is then to first make a building material according to the process mentioned above, then break it down, e.g. to 0/4 (fractions of 0-4 mm), and repeat the process. In that case however only cement and a small amount of tectosilicate is required.

In an second aspect the present invention relates to a mixture comprising 65-97 wt.% granulate, in particular 75-95 wt.%, more in particular 80-93 wt.%, preferably 82-91 wt.%, such as 83-90 wt.%, and 3-35 wt.% composition according to any of claims 1-9, in particular 5-25 wt.%, more in particular 7-20 wt.%, preferably 9-18 wt.%, such as 10-17 wt.%, and 0-10 wt.% water, wherein all weight percentages are based on a total weight of the mixture, in particular wherein the granulate is selected from a carrier, wherein the carrier is selected from fly ash, from burn ash, waste from mining, such as from mining of raw material, sludge, and combinations thereof.

In a third aspect the present invention relates to a support material comprising a mixture according to the invention.

In a fourth aspect the present invention relates to a use of a composition according to the invention or a mixture according to the invention for immobilizing chemical species, in particular metals, more in particular heavy metals, such as Sb, As, Ba, Cd, Cr, Co, Cu, Hg, Pb, Mo, Ni, Se, Sn, V, Zn, halides, such as Br, Cl, and F, and sulphate, poly aromatic carbons, poly chlorobiphenyls, mineral oils, and combinations thereof.

In a fifth aspect the present invention relates to a method of obtaining a mixture according to the invention, comprising dry mixing tectosilicate, 5-20% of the cement, and granulate, and adding the remainder of the cement and water, and optional compounds, and mixing the tectosilicate, cement, granulate, water and optional compounds.

The present invention provides a solution to one or more of the above-mentioned problems and overcomes drawbacks of the prior art.

Advantages of the present description are detailed throughout the description.

### DETAILED DESCRIPTION OF THE INVENTION

In an exemplary embodiment of the present composition the tectosilicate is in mineral form.

In an exemplary embodiment of the present composition the tectosilicate is a natural tectosilicate, or an artificial tectosilicate, or a combination thereof.

In an exemplary embodiment of the present composition the tectosilicate is a zeolite,

In an exemplary embodiment of the present composition the tectosilicate comprises tetrahedra with Si and O in a ratio of about 1:2.

In an exemplary embodiment of the present composition the tectosilicate is selected from alumino-silicates, preferably from Analcime (NaAl(Si₂O₆)·(H₂O)), Clinoptilolite ((Na,K,Ca)₂₋₃Al₃(Al,Si)₂Si₁₃O₃₆·12(H₂O)) (CAS-number 12173-10-3), Laumontite (CaAl₂Si₄O₁₂·4(H₂O)), Chabazite ((Ca_{0,5},Na,K)₄[Al₄Si₈O₂₄]·12H₂O), Gismondine (Ca₂Al₄Si₄O₁₆·9(H₂O)), Mazzite (K₂CaMg₂(Al,Si)₃₆O₇₂·28(H₂O)), Heulandite ((Ba,Sr,K,Ca,Na)₂₋₃Al₃(Al,Si)₂Si₁₃O₃₆·12(H₂O)), Stilbite (NaCa₄Al₈Si₂₈O₇₂·30(H₂O)), Scolecite (CaAl₂Si₃O₁₀·3H₂O), Natrolite (Na₂Al₂Si₃O₁₀·2(H₂O)), Erionite ((Na₂,K₂,Ca)₂Al₄Si1₄O₃₆·15H₂O), Mordenite ((Ca,Na₂,K₂)Al₂Si₁₀O₂₄·7(H₂O)), Gottardiite (Na₃Mg₃Ca₅Al₁₉Si₁₁₇O₂₇₂·₉₃(H₂O)), and Brewsterite ((Sr,Ba)Al₄Si₁₂O₃₂·10(H₂O)), dehydrated forms thereof, and combinations thereof.

In an exemplary embodiment of the present composition the tectosilicate has an average particle size of ≥ 50 µm (Malvern Mastersizer 3000), in particular 80-500 µm, more in particular 100-400 µm, such as 200-300 µm, and/or a minimum particle size of ≥ 50 µm.

In an exemplary embodiment of the present composition the rock flour has an average particle size of < 0.1 mm, and/or wherein the rock flour comprises 80-100 wt.% limestone, such as CaCO₃ and/or MgCaCO₃.

In an exemplary embodiment of the present composition the nitrate is in powder form, in grain form, in pellet form, in a solution, in particular an aqueous solution, and combinations thereof.

In an exemplary embodiment of the present composition the cement is selected from type I, type II, type III, type IV, type V, Portland cement, blast furnace cement, and combinations thereof.

In an exemplary embodiment of the present composition the cement is a calcium aluminate cement.

In an exemplary embodiment of the present composition the cement has an average particle size of 20-100 µm, in particular 30-50 µm.

In an exemplary embodiment of the present mixture the mixture is divided into fractions, in particular with an average particle size of 100-2000 µm, more in particular 200-1000 µm.

In an exemplary embodiment the present mixture has a particle size < 4 mm.

In an exemplary embodiment the present mixture has a particle distribution with 90% of the particles with a size > 100 µm, in particular 10% > 250 µm.

In an exemplary embodiment the present mixture may comprise 0.1-2 wt.% of fresh tectosilicate, in particular 0.2-1 wt.%.

In an exemplary embodiment of the present use the chemical species originate from a carrier, wherein the carrier is selected from fly ash, from burn ash, waste from mining, such as from mining of raw material, sludge, and combinations thereof.

Calcium nitrate can be used in both granular and liquid form, and when applied in an unbound form in combination with a small amount of cement (approx. 5 kg/tonne carrier), can reduce the leaching of antimony and bromide. This makes some compositions suitable for free reuse by a simple treatment.

To determine an adequate dosage of tectosilicates and cement and whether other additives are required, various tests were carried out. The finer the grain structure of the carrier, the more specific surface area, the higher the dosage of cement and additive required. During the tests, it appeared that there is a point that is at the same level for all fineness's, where the quantity of tectosilicates per tonne of carrier no longer makes a significant difference to the immobilisation gain. The more tectosilicates, therefore, does not necessarily mean the better the end result. At a certain point, the soil becomes saturated and there are no more immobilisation effects. This point is typically found to be 25 kg of tectosilicate per tonne of carrier. It then becomes important to choose the right amount of additive (cement and possibly another filler) which again depends on the carrier, the pollutants and the intended end result/product. But the composition that is very effective (both cost and result) for the AEC incinerator ash is to first mix 25 kg of tectosilicate and 5 kg of cement with the carrier and then to mix this mixture with 45 kg of cement and sufficient binding water.

In an immobilisation process, tectosilicates are found to work closely together with the quantity of cement, so the correct build-up of the quantity of cement with tectosilicate is decisive for the result. But in order for the components to react, an activator is required - which is water. Cement needs water for its binding mechanism and tectosilicate needs water to be able to realise its chemical reaction with the various pollutants. Results were achieved in tests on AEC fractions, which showed that the pollutants are immobilised. More specifically, the leaching of antimony, copper, chlorides and bromides, which cause the leaching limits to be exceeded in AEC granulates, were examined. In this patent, inventors have chosen to use the studies on the AEC material as exemplary material because AEC is produced in large mono-flows by incinerating our waste. The treatment of the pollutants is done by mixing the carrier with said additives in a predetermined amount. So that an immobiliser can be formed by mixing and compacting. Binding the pollutants gives the opportunity to reuse the materials as a structural building product instead of dumping them in a landfill.

In order to immobilise the substances antimony, copper, chloride and bromide (substances known for their high leachability), a quantity of 35 to 75 kg of cement and 10 to 30 kg of tectosilicate plus 2 to 6% binding water per tonne of carrier is required. Within these limits, the pollutants can be immobilised to such an extent that they comply with the limit values for designed building materials (provided that the contamination remains within the limits indicated below). There are limits within which the values of the pollutants must lie in order to be treated successfully in this process. In order to map this out, inventors compared the limits with those included in the Soil Quality Decree for an IBC variant. (IBC means the (I) immobilisation (wrapping in plastic foil), (B) heating and (C) de-rolling process). These limit values have been determined for application in an immobilised and controlled environment.

Since the studies show that the combination of bromides and chlorides means that the amount of chloride must be reduced and the amount of antimony must be increased, a fifth column has been added to table 1, which inventors refer to as the bound variation.

This changes the permissible antimony and chloride (if there is no bromide contamination or the level is below 15 mg/kg.ds, the chloride can be increased to 7,500 mg/kg.ds).

By increasing the cement quantity (200 to 300 kg/ton carrier) a concrete product can be made, however, given the requirements for the carrier material and the desire to apply this only in low-grade structures, a low cement level is applied.

One of the special aspects of the present invention is that by carrying out the process two or more times, it is possible to immobilise further and further, making it possible to immobilise up to approx. 98% of the level of contamination found. The first immobilisation can be done by mixing the carrier with cement, possibly in combination with a filler such as limestone flour, water and with the present additives. When the stabiliser is broken down again into a finer fraction (e.g. 0/4), immobilisation can be done a second time by adding cement (or another suitable binding agent) and, depending on the desired result, extra tectosilicate and water.

In this way, it is possible to reduce the degree of pollution in several steps in such a way that you move from chemical waste to a raw material with free reuse. The tectosilicate already used in the first phase is still active and will once again actively immobilise. The process can be accelerated by adding a small quantity of new tectosilicate.

When inventors want to prevent the leaching of specific antimony and copper in a granular form (i.e. in an unbound state), it is possible to reduce the cement quantity to such an extent (to approx. 5 kg/tonne of carrier) that no solid substance is formed, while the cement does activate the tectosilicate and possibly calcium nitrate to form a bond with the antimony and copper.

The invention will hereafter be further elucidated through the following examples which are exemplary and explanatory of nature and are not intended to be considered limiting of the invention. To the person skilled in the art it may be clear that many variants, being obvious or not, may be conceivable falling within the scope of protection, defined by the present claims.

### EXPERIMENTS/TESTS

### Test 1; research on immobilised aec material and then crushed to 0/4

Was done on AEC material originating from the incinerator in Amsterdam ADM the AEC materials were pulled from a stockpile bunker in Amsterdam in March 2017.

The tests were carried out with a composition where immobilised material was made with 75 kg Cement type I 42.5 N, 50 kg stone meal and varying amounts of tectosilicate and calcium nitrate per 1000 kg of carrier (the AEC) and the mixtures were constructed as follows;

**Table 2: test mixtures**

| Basis material | unit | ADM-2-8/40 | ADM-2-0/8 | BL 170228-5 | M17905-11 | M17905-12 | M17905-13 | M17905-14 |
|---|---|---|---|---|---|---|---|---|
| | | basis | basis | test | test | test | test | test |
| AEC 8/40 | % | 100% | | 65% | 65% | 65% | 65% | 70% |
| AEC 0/8 | % | | 100% | 35% | 35% | 35% | 35% | 30% |
| total AEC | kg | 1000 | 1000 | 1000 | 1000 | 1000 | 1000 | 1000 |
| Cement | kg | | | 150 | 75 | 75 | 75 | 75 |
| rock flour | kg | | | | 50 | 50 | 50 | 50 |
| zeolite | kg | | | | 20 | 40 | 60 | 5 |
| Calcium Nitrate | kg | | | | 5 | 5 | 5 | 5 |
| Water | kg | | | 100 | 80 | 85 | 90 | 75 |

Inventors did a leaching test on 2 different AEC granulates, and also looked at the influence of cement on leaching. The effect of the different amounts of Tectosilicates, in particular zeolite, is part of this study.

In the table 3 below, the leaching rates are given with a L/S 20 shaking test combining ADM 2-8/40 and ADM-2-0/8. The leaching test BL 170228-5 is a test with only cement added without additive and M17905-11,12,13,14 the test results with different amounts of tectosilicates, calcium nitrate, and cement according to the above mentioned compositions.

The last three columns show the leaching numbers permitted by the Soil Quality Decree in the various classifications N (free reuse), IBC (to be used in an immobilisation with aftercare) and V (shaped building material). Since the investigation was carried out on a granulate, the N (free recycling) values apply to all leaching standards as the testing framework.

The conclusion from this test series is clearly that the quantity of Tectosilicates above 25 kg/tonne carrier does not give a better result in these investigations. It is also clear that with 5 kg Tectosilicates per tonne of carrier, clearly less immobilisation effect is achieved.

The bold and underlined numbers indicate an excess on free reuse and should therefore be regarded as dangerous. Please note that the leaching is based on an unformed building material and tested for free reuse.

However, the leaching is substantially lower with cement and additives than with cement alone, and since this is at a level which will not be an objection in a shaped building material, this is proof that with the present invention it is possible to bind Antimony, Copper, Chlorides, Sulphates and Bromides.

**Table 3: results**

| results column test (mg/kg) | shake test L/2=20 | | | shake test L/2=20 | | | |
|---|---|---|---|---|---|---|---|
| Sample mg/kg Ds | ADM-2-8/40 | ADM-2-0/8 | BL17022 8-5 | M17905-11 | M170905-12 | M170905-13 | M170905-14 |
| | March 17 | March 17 | | | | | |
| Ds % | 90,5 | 83,8 | 86,3 | 85,9 | 84,8 | 85,7 | 85,0 |
| conductivity (L/S=10) Ec | 1700 | 2400 | 2000 | 2300 | 1500 | 1700 | 2000 |
| acidity (L/S=10) pH | 10,2 | 9,5 | 11,3 | 12,1 | 11,9 | 11,9 | 11,3 |
| Antimony (Sb) | 1,10 | 1,80 | 0,220 | 0,17 | 0,19 | 0,19 | 0,36 |
| Arsenic (As) | <0,1 | <0,1 | <0,1 | <0,1 | <0,1 | <0,1 | <0,1 |
| Barium (Ba) | 1,80 | 1,70 | 3,60 | 11,00 | 5,00 | 3,80 | 3,00 |
| Cadmium (Cd) | <0,002 | <0,002 | <0,002 | <0,002 | <0,002 | <0,002 | <0,002 |
| Chromium (Cr) | 0,32 | 0,90 | 0,32 | 0,46 | 0,52 | 0,62 | 0,28 |
| Cobalt (Co) | <0,04 | <0,04 | <0,04 | <0,04 | <0,04 | <0,04 | <0,04 |
| Copper (Cu) | 2,40 | 3,00 | 2,60 | 1,40 | 1,50 | 1,30 | 2,00 |
| Mercury (Hg) | <0,0006 | <0,0006 | <0,0006 | <0,0006 | <0,0006 | <0,0006 | <0,0006 |
| Lead (Pb) | <0,1 | <0,1 | <0,1 | 0,19 | <0,1 | <0,1 | <0,1 |
| Molybdenum (Mo) | 0,88 | 1,10 | 0,94 | 0,78 | 0,78 | 0,80 | 1,00 |
| Nickel (Ni) | <0,1 | <0,1 | <0,1 | <0,1 | <0,1 | <0,1 | <0,1 |
| Selene (Se) | <0,1 | <0,1 | <0,1 | <0,1 | <0,1 | <0,1 | <0,1 |
| Tin (Sn) | <0,3 | <0,3 | <0,3 | <0,3 | <0,3 | <0,3 | <0,3 |
| Vanadium (V) | 0,17 | 0,16 | 0,46 | <0,08 | 0,11 | 0,12 | 0,26 |
| Zinc (Zn) | 0,05 | 0,14 | 0,11 | 0,13 | 0,09 | 0,15 | 0,15 |
| Bromide (Br) | 24,0 | 40,0 | 24,0 | 9,6 | 9,0 | 8,2 | 15,0 |
| Chloride [Cl] | 5.000.0 | 7.800.0 | 6.800.0 | 1.860.0 | 1.840.0 | 1.680.0 | 3000,0 |
| Fluoride (F) | 6,000 | 8,000 | 6,000 | 12,000 | 8,000 | 8,000 | 8,000 |
| Sulphate | 9.000.0 | 12.800.0 | 6.000.0 | 200,0 | 440,0 | 520,0 | 1400,0 |

The results in table form showing the percentage reduction in leaching are as follows;

**Table 4: results**

| Tests | unit | ADM-2-8/40 | ADM-2-0/8 | BL 170228-5 | M17905-11 | M17905-12 | M17905-13 |
|---|---|---|---|---|---|---|---|
| | | start | leaching | reduction | reduction | reduction | reduction |
| Antimony | mg/kg.ds | 1,10 | 1,80 | -86% | -89% | -88% | -88% |
| Copper | mg/kg.ds | 2,40 | 3,00 | -7% | -50% | -46% | -53% |
| Bromide | mg/kg.ds | 24,00 | 40,00 | -30% | -72% | -74% | -76% |
| Chloride | mg/kg.ds | 5.000,00 | 7.800,00 | 0% | -73% | -73% | -75% |

It is clearly visible that cement alone (test 5) does fix the heavy metals (with the exception of copper) but does not fix the substances chloride and bromide. This is in contrast to the samples treated with tectosilicates and calcium nitrate, where significant reductions occur.

In this table, inventors can draw an important conclusion, namely that the composition with tectosilicate offers better protection against leaching of antimony, copper, bromide and chloride than the use of cement alone.

The conclusion is also justified that in the combination with cement, Tectosilicate also performs better within the entire metal range than with cement alone.

### Test 2; research on immobilised concrete products after re-cracking on 0/4 fraction

Following these tests, there is more specifically looked at the immobilization of the chlorides in a concrete mixture on pre-treated AEC granulate 0/28 in constructive application (production of concrete blocks). And also the effect of double immobilisation on a product made with 100% AEC granulate, which was already formed into a concrete product immobilised with the present invention. So after the first immobilisation of recipe 5, this was broken down to 0/4 and immobilised again to recipe 80. This is an important step because it shows that you can immobilise several times with the same system.

Products 1 to 3 a part of the normal sand and gravel aggregate in ordinary concrete has been replaced by AEC. In products 4 and 5, the total sand and gravel has been replaced by AEC, and in product 6, the crushed aggregate of 5 has been used.

These results show that with the addition of cement and Tectosilicates, there is an immobilisation of the chloride pollution in a carrier. The quantity of cement used was 270 kg/m3 based on constructive concrete for concrete products such as bricks and tiles. Here too, inventors see the reduction of chloride with optimally used additives occurs between 70% and 80%. Also in the second immobilisation course you get the same reduction of in this case 73%, see recipe 6.

Another important observation is that the age of the immobilisate is of essential importance; under the influence of CO₂ from the air, an ageing and also a reduction of pollutants occurs. This is partly because the reaction of cement under the influence of tectosilicate continues to build up over time. Inventors have seen that tests at 7 days give 80 to 85% of the leaching that occurs at 28 days, and due to the effect of the tectosilicates, the immobilisation continues after 28 days even at 3 years inventors still measure improvements of a few percent.

**Table 5: results**

| Concrete blocks number | 1 | 2 | 3 | 4 | 5 | 6 | Boundary value |
|---|---|---|---|---|---|---|---|
| unit | mg/kg.ds | mg/kg.ds | mg/kg.ds | mg/kg.ds | mg/kg.ds | mg/kg.ds | mg/kg.ds |
| leaching on | | | | | | | |
| Chloride in carrier | 330 | 667 | 660 | 2375 | 2375 | 564 | 616 |
| Chloride in concrete block | 180 | 180 | 350 | 450 | 605 | 150 | |
| Difference immobilisation | -45% | -73% | -47% | -81% | -75% | -73% | |
| Composition | | | | | | | |
| Sand/grind basis | 90% | 75% | 75% | 0% | 0% | | |
| carrier of AEC | 10% | 25% | 25% | 100% | 100% | | |
| Granulate of test 5 | | | | | | 100% | |
| Cement | 11,50% | 11,50% | 11,50% | 11,50% | 11,50% | 10% | |
| Zeolite | 0,20% | 1,70% | 0,40% | 1,70% | 1,50% | 0,50% | |

### Test 3, comparison between immobilised carrier shaped and unshaped

Inventors also carried out research into the influence of the present invention on the shaped building materials, and this inventors did with a composition of AEC fractions combined with Portland cement, tectosilicate, calcium nitrate and water.

The following mixtures were used for this purpose

**Table 6: compositions**

| Composition | unit | Type | Type | Type | Type | Type |
|---|---|---|---|---|---|---|
| | KG | A | B | B | C | C |
| sample | | 7 | 8 | 9 | 10 | 11 |
| age in days | | 28 | 28 | 28 | 28 | 28 |
| AEC 0/2 | kg | 1000 | 1000 | 1000 | 1000 | 1000 |
| Cement | kg | 50 | 50 | 75 | 100 | 125 |
| Zeolite | kg | 0 | 25 | 25 | 25 | 25 |
| Calcium nitrate | kg | 0 | 5 | 5 | 0 | 0 |
| Water | kg | 25 | 40 | 40 | 50 | 60 |

Proctors were made of these compositions and these were broken after 28 days and examined for the broken material 0/4 by an LS 1/10 shake test;

Underlined are the exceedances of the free recycling limit, where inventors can clearly see that the use of tectosilicate in combination with cement results in a reduction of the leaching. Inventors also see that bromide needs extra calcium nitrate to drop to a level that is acceptable for a free re-use limit.

Tectosilicates, in addition to being able to bond with heavy metals and anions, also have the property of forming more and denser cement stone in the moulded state. In addition, they seal the pores in the concrete better, making it more difficult for water to penetrate. It also gives a general strengthening of the cement structure, so that the extra immobilization value can be achieved.

**Table 7: Results**

| Measurements on sample | | AEC | test A | test B | test B | test C | test C | norm |
|---|---|---|---|---|---|---|---|---|
| | number | carrier | 7 | 8 | 9 | 10 | 11 | N |
| | days | Basis | 28 | 28 | 28 | 28 | 28 | mg/kg.ds |
| Antimony (Sb) | mg/kg Ds | *1,4* | *0,57* | 0,25 | *0,37* | 0,16 | 0,079 | 0,32 |
| Arsenic (As) | mg/kg Ds | 0,05 | 0,05 | 0,05 | 0,05 | 0,05 | 0,05 | 0,90 |
| Barium (Ba) | mg/kg Ds | 5,2 | 1,3 | 0,85 | 1,1 | 1,8 | 4,3 | 22,00 |
| Cadmium (Cd) | mg/kg Ds | 0,031 | 0,032 | 0,008 | 0,026 | 0,006 | 0,001 | 0,04 |
| Chromium (Cr) | mg/kg Ds | *2,5* | 2 | *1,2* | *1,5* | *1,2* | *0,75* | 0,63 |
| Cobalt (Co) | mg/kg Ds | 0,02 | 0,035 | 0,1 | 0,03 | 0,02 | 0,02 | 0,54 |
| Copper (Cu) | mg/kg Ds | *17* | *15* | *5,4* | *11* | *9,2* | *4,5* | 0,90 |
| Mercury (Hg) | mg/kg Ds | 0,0003 | 0,0003 | 0,0003 | 0,0003 | 0,0004 | 0,0003 | 0,02 |
| Lead (Pb) | mg/kg Ds | 0,19 | 0,05 | 0,05 | 0,05 | 0,05 | 0,082 | 2,30 |
| Molybd. (Mo) | mg/kg Ds | *3* | *4,8* | *2,6* | *4,4* | *4* | *1,9* | 1,00 |
| Nickel (Ni) | mg/kg Ds | 0,22 | *1,8* | *0,66* | *1,2* | *0,78* | 0,23 | 0,44 |
| Selene (Se) | mg/kg Ds | 0,05 | 0,05 | 0,05 | 0,05 | 0,05 | 0,05 | 0,15 |
| Tin (Sn) | mg/kg Ds | 0,15 | 0,15 | 0,15 | 0,15 | 0,15 | 0,15 | 0,40 |
| Vanadium (V) | mg/kg Ds | 0,2 | 0,41 | 0,38 | 0,53 | 0,2 | 0,045 | 1,80 |
| Zinc (Zn) | mg/kg Ds | 0,12 | 0,02 | 0,13 | 0,12 | 0,054 | 0,099 | 4,50 |
| Bromide (Br) | mg/kg Ds | *41* | *41* | 12 | 19 | 28 | 29 | 20 |
| Chloride [Cl] | mg/kg Ds | *7000* | *6600* | *4000* | *4000* | *4200* | *3800* | 616 |
| Fluoride (F) | mg/kg Ds | 15 | 5 | 12 | 9 | 12 | 12 | 55 |

In order to further substantiate this on a shaped specimen, tests on leaching were carried out on the AEC mixed samples 7, 8 and 10 in shaped condition and the diffusion tests on 63 days.

The tests below clearly show that without an additive (7) there is an excess of copper, bromide and chloride. And with additive without calcium nitrate but with 50 % more cement, the leaching tests of test 10 do not fall within the limits for bromide also antimony and copper are now higher but not critical.

**Table 8. Further results; see also table 7.**

| Measurements on samples | AEC | norm | test A | test B | test C | Diffusion 63 | Diffusion 63 | Diffusion 63 |
|---|---|---|---|---|---|---|---|---|
| mg/kg Ds | carrier | N | 7 | 8 | 10 | 7 | 8 | 10 |
| | Basis | Days | 28 | 28 | 28 | 63 | 63 | 63 |
| Antimony (Sb) | *1,4* | 0,32 | *0,57* | 0,25 | 0,16 | 7,06 | 3,29 | 6 |
| Arsenic (As) | 0,05 | 0,90 | 0,05 | 0,05 | 0,05 | 0,96 | 0,72 | 3,5 |
| Barium (Ba) | 5,2 | 22,00 | 1,3 | 0,85 | 1,8 | 23,7 | 19,8 | 45 |
| Cadmium (Cd) | 0,031 | 0,04 | 0,032 | 0,008 | 0,006 | 0,11 | 0,036 | 0,078 |
| Chromium (Cr) | *2,5* | 0,63 | 2 | *1,2* | *1,2* | 1,24 | 0,58 | 7,1 |
| Cobalt (Co) | 0,02 | 0,54 | 0,035 | 0,1 | 0,02 | 1,44 | 1,09 | 2,1 |
| Copper (Cu) | *17* | 0,90 | *15* | *5,4* | *9,2* | *113* | 23,5 | 49 |
| Mercury (Hg) | 0,0003 | 0,02 | 0,0003 | 0,0003 | 0,0004 | 0,01 | 0,012 | 0,028 |
| Lead (Pb) | 0,19 | 2,30 | 0,05 | 0,05 | 0,05 | 2,4 | 1,81 | 27 |
| Molybdenum (Mo) | *3* | 1,00 | *4,8* | *2,6* | *4* | 40,3 | 19,9 | 7,1 |
| Nickel (Ni) | 0,22 | 0,44 | *1,8* | *0,66* | *0,78* | 8,93 | 1,84 | 3,7 |
| Selene (Se) | 0,05 | 0,15 | 0,05 | 0,05 | 0,05 | 0,47 | 0,29 | 0,49 |
| Tin (Sn) | 0,15 | 0,40 | 0,15 | 0,15 | 0,15 | 1,44 | 1,09 | 1,4 |
| Vanadium (V) | 0,2 | 1,80 | 0,41 | 0,38 | 0,2 | 6,15 | 4,05 | 1,4 |
| Zinc (Zn) | 0,12 | 4,50 | 0,02 | 0,13 | 0,054 | 2,4 | 1,81 | 1,4 |
| Bromide (Br) | *41* | 20 | *20* | 12 | *28* | *952* | 652 | *890* |
| Chloride [Cl] | *7000* | 616 | *6600* | *4000* | *4200* | *136944* | 86443 | 100000 |
| Fluoride (F) | 15 | 55 | 5 | 12 | 12 | 123 | 70 | 120 |

This shows that the system in shaped building material without additive does not pass the diffusion test.

Conclusion;
The invention is the application of a specific quantity of tectosilicates, in particular zeolite, and possibly calcium nitrate as an additive to immobilize chemically undesirable substances in (old) building materials. The results on pollutants, in particular those substances that cannot be permanently immobilized with cement alone, such as antimony, copper, chlorides and bromides, are very positive.

Inventors have established that the specific surface area (fineness) of the carrier determines the quantity of tectosilicate but especially the binding agent, cement and/or a filler, that inventors must use to obtain a satisfactory result. So the finer the material, the more tectosilicate and cement inventors need, which is explained by the required bonding surface of the carrier.

The tectosilicates used are in powder form. The fineness is important for the speed of bonding and has less effect on the adhesion of the material. However, fineness's of 50 to 450 µ were also included in the study and no differences were found.

The research mainly looked at the metals that are very difficult to bind, such as antimony and copper, and the anions such as chlorides and bromides. But special research was done into chlorides, which are known to be very difficult to immobilize. Inventors have shown here that immobilization can take place to a high degree with the present invention.

Tectosilicates can be added by mixing, depending on the desired result with approximately 10 kg to 25 kg of tectosilicates per ton of carrier. The most optimal situation is 25 kg of tectosilicates per ton of carrier. Above 25 kg of tectosilicates, no further improvements are seen. These tectosilicates can be supplemented with various types of cement and, in addition, stone flour, fly ash, micro silica and other fillers can be added to improve the effect. The environment in which the tectosilicates do their work will also have to contain 2% to 8% moisture.

Tectosilicates can be of artificial or natural origin and can, in principle, be used in any composition. Tectosilicates can bind pollutants through molecular sieving, adsorption, ion exchange and catalysis and work better in combination with cement. In principle, cement can be of any composition such as cement type I,II,IV or V or any other composition; the quantity of Tricalcium aluminate (C3A) and Tetra calcium alumino ferrite (C4AF) determine the binding capacity with leachable chlorides. The tests show that blast furnace cement gives the same result as Portland cement. (in combination with tectosilicate)

The tectosilicates can also be added to the cement in advance, resulting in a Tectosilicate cement that retains the same effect in the field of immobilization of pollutants.

Research has shown that pre-mixing the AEC material with the additives tectosilicate and calcium nitrate gives a better result than mixing in one pass during production, but both can give the desired result.

The invention has the potential to be applied to all solid residues such as contaminated soil, industrial residues and other released waste streams.

With the present invention, it is possible to immobilize further and further by repeating the process two or more times. This makes it possible to go back in steps to freely reusable raw material. At the end of its life, the product that is then created is a freely reusable residue instead of a chemically contaminated material.

Cement has the important property of binding heavy metals in a hydrated, i.e. hardened product. Real pH sensitive contaminants such as antimony and copper can cause problems here. Tectosilicates help to achieve a better binding and higher immobilization.

Through molecular sieving, adsorption, ion exchange and catalysis, the Tectosilicate is able to bind other substances or change them chemically. In the case of the fixation of leachable substances in polluted carriers, a cement and tectosilicate combination is required to initiate the reactions and to achieve an optimal yield. Tectosilicates also have the ability to store and release a lot of water in their structure.

It is possible to immobilize with tectosilicates in several steps, which means that if immobilization does not achieve the desired effect the first time, this can be repeated. By immobilizing several times with the present invention, the values are brought back to the desired level in steps. This makes it possible to bring the materials back to free recycling standards, which considerably expands the areas of application. In the steps, it is not always necessary to use tectosilicate, but cement.

The present invention works with all tectosilicates, both those of natural origin (of which there are about 50 known) and artificially manufactured zeolites (of which there are about 100 known).

Tectosilicates work in combination with cement and water, whereby it is important that the quantity is adjusted to the fineness (specific surface) of the carrier. Tectosilicates enhance the effect of cement and make it possible to apply polluting carriers in concrete and stabilization, which in many cases cannot be applied with cement alone.

## Claims

1. Composition for immobilization of chemical species comprising
1-30 wt.% of a tectosilicate, in particular 2-25 wt.%, more in particular 8-22 wt.%, such as 12-20 wt.%, in particular a tectosilicate comprising silicon-oxide tetrahedra,
10-50 wt.% of cement, in particular 20-40 wt.%, more in particular 25-37 wt.%, such as 27-35 wt.%,
0-50 wt.% water, in particular 10-40 wt.%, more in particular 25-37 wt.%, such as 30-35 wt.%,
0.5-10 wt.% nitrate, preferably CaNO₃, in particular 0.5-8 wt.%, more in particular 1-4 wt.%, such as 1.5-2.5 wt.%,
0-25 wt.% of quartz, silicon oxide, glass, opal, or a combination thereof, in particular 0.5-20 wt.%, more in particular 1-15 wt.%, such as 5-12 wt.%,
and
0-50 wt.% rock flour, in particular 10-35 wt.%, more in particular 15-30 wt.%, such as 17-24 wt.%,
0-3 wt.% reinforcing material, such as micro silica, and fumed silica,
wherein all weight percentages are based on a total weight of the composition.

2. Composition according to claim 1, wherein the tectosilicate is in mineral form, and/or wherein the tectosilicate is a natural tectosilicate, or an artificial tectosilicate, or a combination thereof, and/or
wherein the tectosilicate is a zeolite, and/or
wherein the tectosilicate comprises tetrahedra with Si and O in a ratio of about 1:2.

3. Composition according to any of claims 1-2, wherein the tectosilicate is selected from alumino-silicates, preferably from Analcime (NaAl(Si₂O₆)·(H₂O)), Clinoptilolite ((Na,K,Ca)₂₋₃Al₃(Al,Si)₂Si₁₃O₃₆·12(H₂O)) (CAS-number 12173-10-3), Laumontite (CaAl₂Si₄O₁₂·4(H₂O)), Chabazite ((Ca_{0,5},Na,K)₄[Al₄Si₈O₂₄]·12H₂O), Gismondine (Ca₂Al₄Si₄O₁₆·9(H₂O)), Mazzite (K₂CaMg₂(Al,Si)₃₆O₇₂·28(H₂O)), Heulandite ((Ba,Sr,K,Ca,Na)₂₋₃Al₃(Al,Si)₂Si₁₃O₃₆·12(H₂O)), Stilbite (NaCa₄Al₈Si₂₈O₇₂·30(H₂O)), Scolecite (CaAl₂Si₃O₁₀·3H₂O), Natrolite (Na₂Al₂Si₃O₁₀·2(H₂O)), Erionite ((Na₂,K₂,Ca)₂Al₄Si1₄O₃₆·15H₂O), Mordenite ((Ca,Na₂,K₂)Al₂Si₁₀O₂₄·7(H₂O)), Gottardiite (Na₃Mg₃Ca₅Al₁₉Si₁₁₇O₂₇₂·₉₃(H₂O)), and Brewsterite ((Sr,Ba)Al₄Si₁₂O₃₂·10(H₂O)), dehydrated forms thereof, and combinations thereof.

4. Composition according to any of claims 1-3, wherein the tectosilicate has an average particle size of ≥ 50 µm (Malvern Mastersizer 3000), in particular 80-500 µm, more in particular 100-400 µm, such as 200-300 µm, and/or a minimum particle size of ≥ 50 µm.

5. Composition according to any of claims 1-4, wherein the rock flour has an average particle size of < 0.1 mm, and/or wherein the rock flour comprises 80-100 wt.% limestone, such as CaCO₃ and/or MgCaCO₃.

6. Composition according to any of claims 1-5, wherein the nitrate is in powder form, in grain form, in pellet form, or in a solution, in particular an aqueous solution, and combinations thereof.

7. Composition according to any of claims 1-6, wherein the cement is selected from type I, type II, type III, type IV, type V, Portland cement, blast furnace cement, and combinations thereof.

8. Composition according to any of claims 1-7, wherein the cement is a calcium aluminate cement.

9. Composition according to any of claims 1-8, wherein the cement has an average particle size of 20-100 µm, in particular 30-50 µm.

10. Mixture comprising 65-97 wt.% granulate, in particular 75-95 wt.%, more in particular 80-93 wt.%, preferably 82-91 wt.%, such as 83-90 wt.%, and 3-35 wt.% composition according to any of claims 1-9, in particular 5-25 wt.%, more in particular 7-20 wt.%, preferably 9-18 wt.%, such as 10-17 wt.%, and 0-10 wt.% water,
wherein all weight percentages are based on a total weight of the mixture, in particular wherein the granulate is selected from a carrier, wherein the carrier is selected from fly ash, from burn ash, waste from mining, such as from mining of raw material, sludge, and combinations thereof.

11. Mixture according to claim 10, wherein the mixture is divided into fractions, in particular with an average particle size of 100-2000 µm, more in particular 200-1000 µm, and/or with a particle size < 4 mm, and/or with a particle distribution with 90% of the particles with a size > 100 µm, in particular 10% > 250 µm.

12. Mixture according to claim 10 or 11, comprising 0.1-2 wt.% of fresh tectosilicate, in particular 0.2-1 wt.%.

13. Support material comprising a mixture according to any of claims 10-12.

14. Use of a composition according to any of claims 1-9 or a mixture according to any of claims 10-12 for immobilizing chemical species, in particular metals, more in particular heavy metals, such as Sb, As, Ba, Cd, Cr, Co, Cu, Hg, Pb, Mo, Ni, Se, Sn, V, Zn, halides, such as Br, Cl, and F, and sulphate, poly aromatic carbons, poly chloro biphenyls, mineral oils, and combinations thereof, in particular wherein the chemical species originate from a carrier, wherein the carrier is selected from fly ash, from burn ash, waste from mining, such as from mining of raw material, sludge, and combinations thereof.

15. Method of obtaining a mixture according to any of claims 10-12, comprising dry mixing tectosilicate, 5-20% of the cement, and granulate, and adding the remainder of the cement and water, and optional compounds, and mixing the tectosilicate, cement, granulate, water, and optional compounds, with the composition according to any of claims 1-9.
